## Europäisches Patentamt

## European Patent Office

## Office européen des brevets

(11) Publication number: **0 147 333**
**B1**

(12) **EUROPEAN PATENT SPECIFICATION**

(45) Date of publication of patent specification: **07.03.90**

(21) Application number: **84402729.2**

(22) Date of filing: **27.12.84**

(51) Int. Cl.⁵: **G 02 B 5/10,** H 01 Q 15/14, G 01 B 11/26, G 01 S 17/87, F 41 G 7/26

(54) Object discrimination and position determination system.

(30) Priority: **27.12.83 FR 8320862**
**27.12.83 FR 8320863**

(43) Date of publication of application:
**03.07.85 Bulletin 85/27**

(45) Publication of the grant of the patent:
**07.03.90 Bulletin 90/10**

(84) Designated Contracting States:
**DE FR GB IT NL SE**

(56) References cited:
**FR-A-1 570 810**
**US-A-3 167 769**
**US-A-3 653 769**
**US-A-4 221 468**
**US-A-4 326 799**

La recherche aérospatiale, January - February, 1983-1, p.p. 33-35
A. Pluckon and Y. Surget: "Restitution de position et d'attitude"

(73) Proprietor: **Office National d'Etudes et de Recherches Aérospatiales (O.N.E.R.A.)**
**29 Avenue de la Division Leclerc**
**F-92320 Châtillon-sous-Bagneux (FR)**

(72) Inventor: **Bretaudeau, Francis**
**44, rue Georges Bailly**
**F-92260 Fontenay-aux-Roses (FR)**
Inventor: **Sarazin, Marc**
**82, rue du Moulin Vert**
**F-75014 Paris (FR)**

(74) Representative: **Martinet & Lapoux**
**62, rue des Mathurins**
**F-75008 Paris (FR)**

Courier Press, Leamington Spa, England.

EP 0 147 333 B1

**Description**

1—Field of the invention

The present invention relates to object discrimination and position determination systems including three-dimensional pattern reflectors which are designed to deliver specific responses when illuminated by a source of radiation.

A reflector comprises a reflective surface carrying substantially parallel and adjacent undulations and corrugations and describing a determined geometric shape. The reflector has a symmetry axis. When the reflector is illuminated by a scanning beam or by a fixed illuminating beam emitted by a radiation transmitter, the beam is reflected by the reflector towards a detector, generally a camera, and on an image plane of the detector, the reflector response appears as an array of discrete illuminated points or dots, the specific shape of which makes it possible to discriminate between different reflectors.

The locations respectively of the transmitter and of the detector can coincide or not.

When the transmitter and the detector are adjacent, they are assumed as coinciding and in the art such an assembly is called an imager. Further, the location of the array of dots on the detector image plane is determined by and corresponds to the illuminated points of the reflector surface the normals of which points run towards the imager.

When the transmitter and the detector are not adjacent and do not coincide, the location of the array of dots on the detector image plane is determined by and corresponds to the illuminated points of the reflector surface whose normals coincide with a line bisecting an angle defined by two directions joining said illuminated points respectively to the transmitter .and to the detector of the transmitter-detector assembly.

For object discrimination operations, a system according to the invention must comprise several types of reflectors which are selectively fixed to mobile objects and then a mobile object can be identified by reading the corresponding array of dots on the detector image plane.

As it is known for position determination operations of mobile objects, it is necessary to determine a transfer relation between a measurement system of reference on an image plane, in which are read coordinates of the mobile object, and an absolute system of reference in which are generally known the coordinates of the observation point, said observation point corresponding in the present application to a point locating the transmitter-detector assembly.

According to the invention and in order to allow the determination of said transfer relation, the projection of the observation point or reference point corresponding to the location of the transmitter-detector assembly is read on the image plane from arrays of dots produced on the image plane by at least two reflectors.

2—Description of the prior art

French Patent No. 1,570,810 filed June 10, 1968 disclosed a mirror for motor-cars fitted out with corrugated reflective parts having concentric circular undulations. These corrugated reflective parts convert an image of a traffic light into a plurality of luminous points rectilinearly aligned.

Summary of the invention

The dots generated by the illuminated reflector and detected by the imager are spread over a straight or curved dot line running through the center of the reflector and through the projection of the imager onto the plane of a flat reflector or the equatorial plane of a spherical reflector. Reflectors with concentric circular corrugations, reflectors with corrugations running out radially from a center, reflectors with both circular and radial corrugations and reflectors with hyperbolic corrugations will be disclosed in the following, all these reflectors being flat. Depending on the type of reflector, the dots of the illuminated dot lines are distributed on a straight line, on a circular line, on both a straight line and a circular line or on an equilateral hyperbolic line. We shall also describe spherical reflectors in which the illuminated dot line appears as a straight line running through the symmetry center of a spherical surface projection seen by the detector.

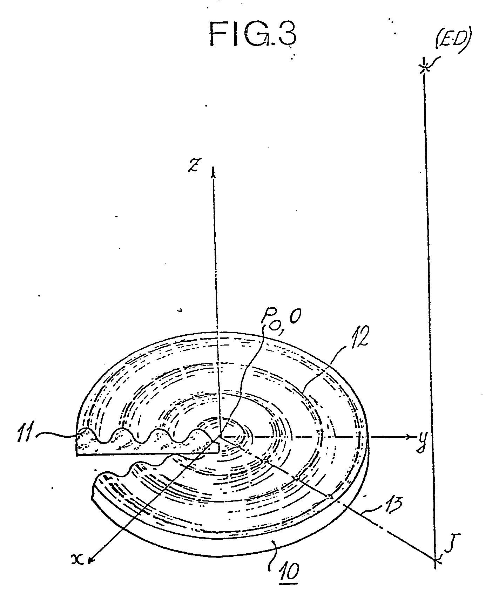

An illuminated dot line is produced by the detector when the projection of the point locating the transmitter-detector assembly onto the reflector plane falls outside the symmetry axis of the reflector. When the projection of the point locating the transmitter-detector assembly falls onto this axis of symmetry, a non-dotted line having another shape identical with the undulation pattern is produced. Referring in advance to Fig. 3 the dot lines are straight lines and the non-dotted lines are circles.

In accordance with the invention, the mobile object for which recognition and position determination are being sought carries at least two reflectors with one family of corrugations or a single reflector with two families of corrugations and these reflectors reflect at least two illuminated dot lines towards the detector that run through the detector projection on the reflector plane if the detector and transmitter coincide, or through the projection of the mid-point of the segment joining the transmitter and the detector if they do not coincide. The reflector plane is thus established with respect to a reference frame about the detector; it lies perpendicular to the straight line of sight from the detector to the said point of projection.

The first step is to establish the equations for the surface of the reflectors.

General case

In the general case, the transmitter E and the detector D do not coincide.

Let:

$x_E, y_E, z_E$ be the transmitter E coordinates;

$x_D, y_D, z_D$ be the detector D coordinates;

$x, y, z$ be the coordinates of the running point P of the reflector; and

$N(x, y, z)=0$ be the equation of the reflector in the $x, y, z$ reference frame with the origin at O, the center of the reflector reference frame.

For the point P to be seen by the detector D, then the following conditions must exist:

$$\left.\begin{array}{l} \dfrac{\partial N}{\partial x}=\lambda[\; \|\overrightarrow{PD}\|\,(x_E-x)+\|\overrightarrow{PE}\|\,(x_D-x)] \\[2em] \dfrac{\partial N}{\partial y}=[\;\|\overrightarrow{PD}\|\,(y_E-y)+\|\overrightarrow{PE}\|\,(y_D-y)] \\[2em] \dfrac{\partial N}{\partial z}=[\;\|\overrightarrow{PD}\|\,(z_E-z)+\|\overrightarrow{PE}\|\,(z_D-z)] \end{array}\right\} \qquad (1)$$

where $\|\overrightarrow{X}\|$ is the Eclud's norm of the vector $\overrightarrow{X}$ and $\lambda$ is a real number.

The equation system (1) becomes simplified in two cases.

First case

The transmitter E and the detector D are close together. It is possible then to write:

$$\|\overrightarrow{PD}\| \simeq \|\overrightarrow{PE}\| = e$$

The equation system (1) becomes:

$$\left.\begin{array}{l} \dfrac{\partial N}{\partial x}=\lambda e[x_E+x_D-2x] \\[2em] \dfrac{\partial N}{\partial y}=\lambda e[y_E+y_D-2y] \\[2em] \dfrac{\partial N}{\partial z}=\lambda e[z_E+z_D-2z] \end{array}\right\} \qquad (2)$$

Second case

The transmitter E and the detector D coincide. It is possible then to write:

$$\|\overrightarrow{PE}\| = \|\overrightarrow{PD}\| = e$$

and in addition:

$$x_E=x_D=x_I; \quad x_I=(x_E+x_D)/2$$

$$y_E=y_D=y_I; \quad y_I=(y_E+y_D)/2$$

$$z_E=z_D=z_I; \quad z_I=(z_E+z_D)/2$$

The equation system (1) becomes:

$$\frac{\partial N}{\partial x}=2\lambda e(x_l-x)$$

$$\frac{\partial N}{\partial y}=2\lambda e(y_l-y) \qquad (3)$$

$$\frac{\partial N}{\partial z}=2\lambda e(z_l-z)$$

By eliminating the term $2\lambda e$ from the equation system (3), the following is obtained:

$$x_l-x=(z_l-z)\left[\frac{\partial N}{\partial x} \Big/ \frac{\partial N}{\partial z}\right]$$

$$y_l-y=(z_l-z)\left[\frac{\partial N}{\partial y} \Big/ \frac{\partial N}{\partial z}\right] \qquad (4)$$

First example

The reflector equation has the form:

$$N(x,\, y,\, z)=z-f(\rho)=0 \qquad (5)$$

If:

$$\rho=(x^2+y^2)^{1/2} \qquad (6)$$

Then:

$$\frac{\partial N}{\partial x}=-\frac{\partial f}{\partial \rho}\cdot\frac{x}{\rho}\; ;\; \frac{\partial N}{\partial y}=-\frac{\partial f}{\partial \rho}\cdot\frac{y}{\rho}\; ;\; \frac{\partial N}{\partial z}=1 \qquad (7)$$

Since (4) and (7) give:

$$\frac{\partial N}{\partial y} \Big/ \frac{\partial N}{\partial x}=y/x=\frac{y_l}{x_l} \qquad (8)$$

So, the projections of the points seen by the imager lie on a straight line running through the imager projection on the reflector plane and through the center $P_0$ of the reflector $x=y=0$. This point $P_0$ is also the origin O.

Should E and D be closest but not coincident, $x_l$ and $y_l$ are replaced by $(x_E+x_D)/2$ and $(y_E+y_D)/2$, or in other words the imager is considered as located onto the middle point of the segment joining the transmitter to the detector.

Second example

The reflector equation has the form:

$$N(x,\, y,\, z)=z-f(\theta)=0 \qquad (9)$$

If: $\theta=\tan^{-1}(y/x)$,
Then:

$$\frac{\partial N}{\partial x}=\frac{df}{d\theta}\frac{y}{x^2+y^2}\; ;\; \frac{\partial N}{\partial y}=\frac{df}{d\theta}\frac{-x}{x^2+y^2}\; ;\; \frac{\partial N}{\partial z}=1 \qquad (10)$$

By substituting the values (9) for

$$\frac{\partial N}{\partial x} \quad \text{and} \quad \frac{\partial N}{\partial y}$$

in equations (4), the following is obtained

$$\left[x-\frac{x_I}{2}\right]^2 + \left[y-\frac{y_I}{2}\right]^2 = \left[\frac{\rho_I}{2}\right]^2 \qquad (11)$$

with $\rho_I = (x_I^2 + y_I^2)^{1/2}$.

Equation (11) describes a circle with a radius $\rho_I/2$ running through the origin and the point $(x_I, y_I)$ that is the projection of the imager on the reflector plane.

Third example

The reflector equation has the form:

$$N(x, y, z) = z - f(x^2 - y^2) = 0 \qquad (12)$$

If: $u = x^2 - y^2$, then:

$$\frac{\partial N}{\partial x} = -\frac{df}{du} \cdot 2x; \quad \frac{\partial N}{\partial y} = \frac{df}{du} \cdot 2y; \quad \frac{\partial N}{\partial z} = 1 \qquad (13)$$

By substituting the values (12) in equations (4), the following is obtained:

$$\left[x-\frac{x_I}{2}\right]^2 \left[y-\frac{y_I}{2}\right]^2 = \frac{x_I\, y_I}{4} \qquad (14)$$

Equation (14) describes an equilateral hyperbola running through the origin and the point $(x_I, y_I)$ that is the projection of the imager on the reflector plane.

Fourth example

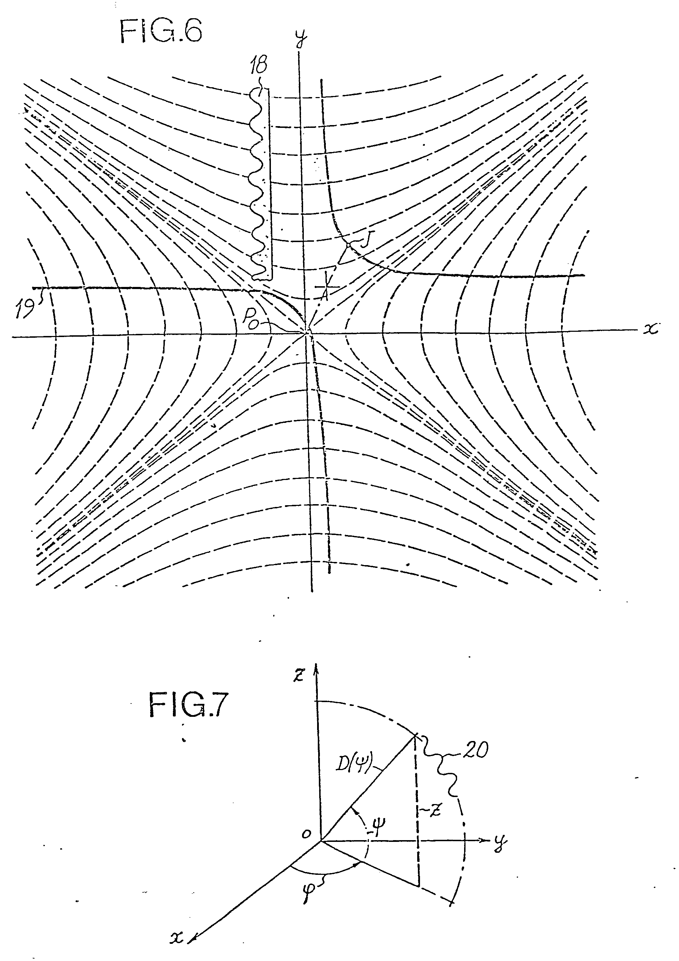

With reference to Fig. 7, jumping ahead, a sphere is represented in cartesian coordinates x, y, z and in spherical coordinates $\varphi$, $\psi$, z. The radius R of the sphere is a periodic function of the latitude $D(\psi)$.

The equation for the spherical reflector is then:

$$N(x, y, z) = x^2 + y^2 + z^2 - D2(\psi) = 0 \qquad (15)$$

$\psi$ is related to z by:

$$\tan \psi = z/R$$

where $R = (x^2 + y^2)^{1/2}$.

The partial derivatives of N with respect to the coordinates may be expressed as:

$$\left.\begin{array}{l}
\dfrac{\partial N}{\partial x} = 2x\left[1 + \dfrac{D'(\Psi)}{D(\Psi)} \cdot \dfrac{z}{R}\right] \\[2em]
\dfrac{\partial N}{\partial y} = 2y\left[1 + \dfrac{D'(\Psi)}{D(\Psi)} \cdot \dfrac{z}{R}\right] \\[2em]
\dfrac{\partial N}{\partial z} = 2z - 2\,\dfrac{D'(\Psi)}{D(\Psi)} \cdot R
\end{array}\right\} \qquad (16)$$

These partial derivatives must satisfy equations (2) in relation to the case where the transmitter and detector are close together, thus giving:

$$y = \frac{y_E + y_D}{x_E + x_D} \cdot x \qquad (17)$$

5

It results from the above that the projections of the points seen by the imager in the plane z=0 are aligned along an illuminated dot straight line running through the center of the reflector and through the projection onto the plane z=0 of the middle point of the segment joining the transmitter to the detector. When the transmitter and detector coincide, the illuminated dot straight line runs through the imager projection onto the plane z=0.

Brief description of the drawing

The invention will now be described in detail in relation to the appended drawings in which:

Fig. 1 is a geometric diagram showing the condition a scanning beam from a transmitter that falls on a reflector embodying the invention must satisfy in order to be received by a detector separate from the transmitter;

Fig. 2 is a geometric diagram showing the condition a scanning beam from a transmitter that falls on a reflector embodying the invention must satisfy in order to be received by a detector coinciding with the transmitter;

Fig. 3 is a view in perspective showing a planar reflector in which the points seen by the detector are distributed over an illuminated dot straight line;

Figs. 4, 5A and 5B are views in perspective showing a planar reflector in which the points seen by the detector are distributed over a circle;

Fig. 6 represents a planar reflector in which the points seen by the detector are distributed over an equilateral hyperbola;

Figs. 7 and 8 represent a spherical reflector in which the radius is periodically dependent on the latitude;

Figs. 9 and 10 respectively represent reflectors derived from those in Figs. 3 and 4 in which the orthoradially circular (Fig. 3) and radially rectilinear (Fig. 4) undulations are arranged in groups of undulations with different spatial periods;

Fig. 11 represents a reflector having both radial and orthoradial undulations;

Figs. 12a, 12b, 12c are diagrams explaining the geometric process making it possible to deduce the reflector in Fig. 11 and the reflectors in Figs. 3 and 4;

Fig. 13 is a further diagram explaining the construction of the reflector in Fig. 11 on the basis of the reflectors in Figs. 3 and 4;

Fig. 14 depicts a first embodiment of a system for determining direction and distance using the reflectors in Fig. 3;

Fig. 15 explains how the distance between the detector and the reflector is determined when the reflector is of the type shown in Fig. 3;

Fig. 16 depicts a second embodiment of a system for determining direction and distance using the reflectors in Fig. 4;

Fig. 17 explains how the distance between the detector and the reflector is determined when the reflector is of the type shown in Fig. 8;

Figs. 18 and 19 show the system as in the invention when the radiation transmitter and the detector do not coincide; and

Fig. 20 depicts an example of a data processing system making use of the data collected by the detector.

Description of the preferred embodiments

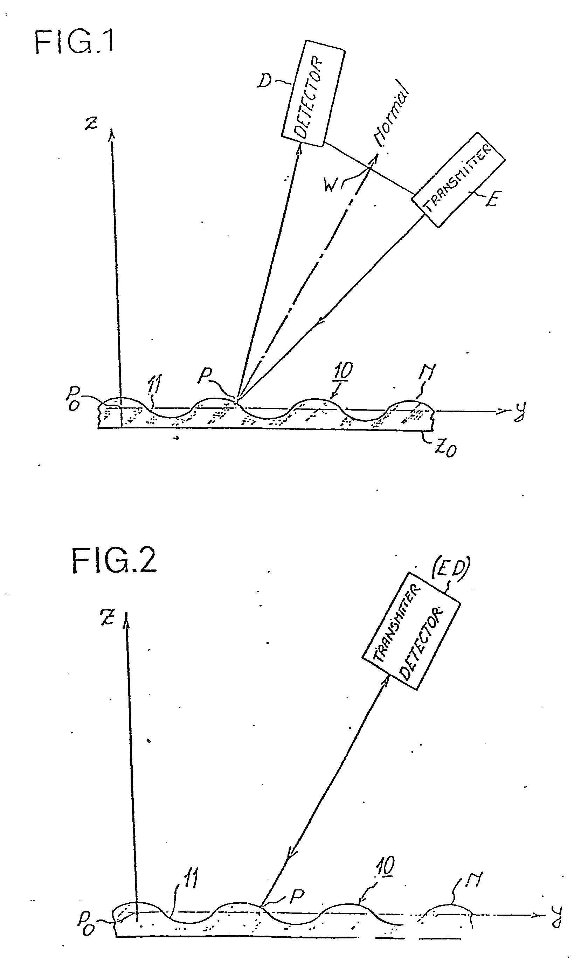

With reference to Fig. 1, block E represents a transmitter such as a laser source and block D represents a detector such as a photodetector or a camera. P indicates a running point on the surface N of reflector 10. Point P is seen by the detector if the normal at P to the surface N coincides with the line bisecting the angle $\widehat{EPD}$. If so, the partial derivatives of $N(x, y, z)$ with respect to the coordinates satisfy equations (1).

In Fig. 2, the transmitter E and detector D coincide at (ED). Point P of the surface N is seen by detector D as an illuminated point if the normal to the surface N at said point P runs through (ED).

For the sake of simplicity, the following examples involve solely periodic distributions of the reflector undulations.

First example (Fig. 3)

The reflector equation is given by:

$$z = A \cos (2\pi \, \rho/\lambda) \qquad ,$$

where A and $\lambda$ are constants and $\rho = (x^2 + y^2)^{1/2}$. In the plane x0z, the cross-section of reflector 10 is a cosine curve 11:

$z = A \cos (2\pi x/\lambda)$ with a spatial period $\lambda$. The reflector surface is generated by rotation of the cosinusoid about the axis 0z. It takes the form of circular undulations 12. The central undulation could be a trough and, if the generatrix were sinusoidal instead of cosinusoidal, then there would be a sharp point standing proud or in a hollow at the origin. The position of the plane $z = z_0$ that limits the plane rearwards is arbitrary.

Fig. 3 depicts the projection J of the imager (ED) and the location of the points seen by the detector as represented by the straight line 13 running through J and $P_0$, the center of the reflector 10. J is a point on the straight line 13 which is indeterminate. Reflector 10 alone cannot serve to recognize the distance and direction of a mobile object.

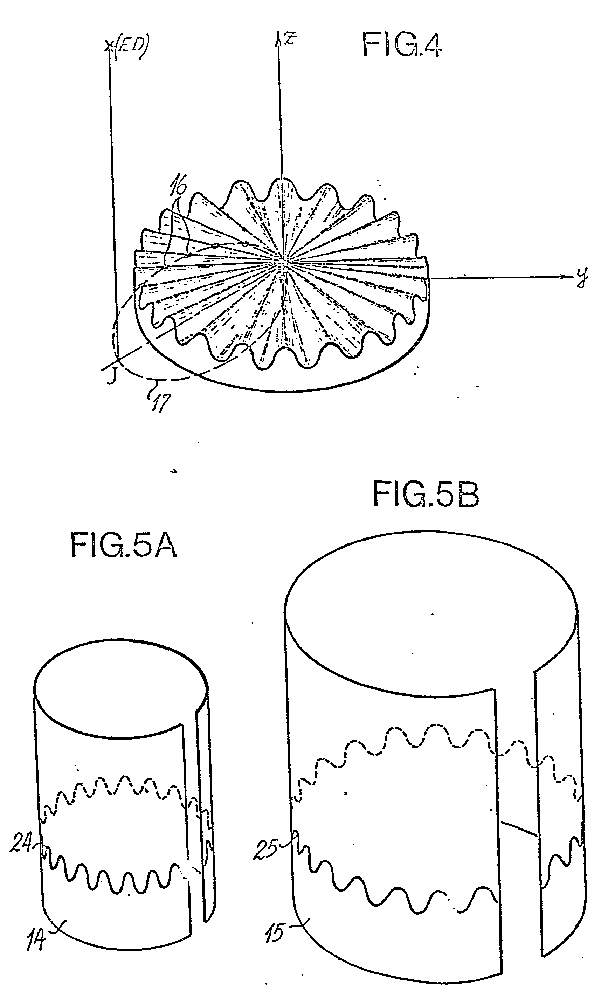

Second example (Figs. 4, 5A and 5B)

The reflector equation is given by:

$$z = A \cos k\theta$$

where A and k are constants. Undulations are no longer orthoradial as in Fig. 3 but are radial.

The reflector cross-section through cylinders 14, 15 coaxial with axis 0z are sinusoids 24, 25 (Figs. 5A and 5B) the positive and negative peaks of which are aligned on the origin $P_0$. Points 16 seen by the detector are arranged in a circle 17 with a diameter $P_0J$ where J is the imager projection (ED) in the reflector plane. Point J is a determinate point of circle 17 which is diametrally opposite point $P_0$.

Third example (Fig. 6)

In Fig. 6, the reflector equation is $z = A \cos(2\pi u/\lambda)$ where $u = x^2 - y^2$. Undulations 18 are substantially hyperbola shaped where the bisecting lines are asymptotes, and are parallel. The points seen by the detector are distributed over an equilateral hyperbola 19 with asymptotes parallel to the coordinate axes. This equilateral hyperbola 19 runs through $P_0$, the center of the reflector, and the imager projection J on the reflector plane.

Point J in Fig. 6 is a well determinate point. It is the symmetric of point $P_0$ with respect to the point of intersection of the asymptotes of the locus of the illuminated points.

Fourth example

Fig. 7 has already been discussed. It shows that the radius of the sphere is a periodic function of the latitude and enabled formulae (15) to be established.

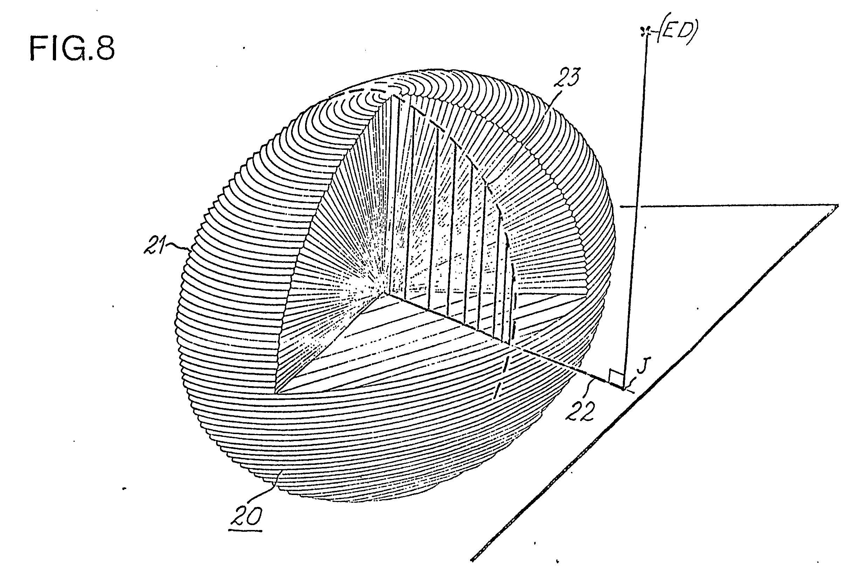

Fig. 8 represents latitude undulations 21 on sphere 20 that are peaks and grooves circular in shape around axis 0z. The projections of the points seen by the detector on the plane x0y are distributed over an illuminated dot straight line 22 running through $P_0$ and through the projection J of the imager (ED) on the plane x0y. This straight line is a diameter of the sphere. On the sphere, the points seen by the detector lie on a great circle 23.

The prime advantage of the spherical reflector is that the apparent length of the straight line formed by the illuminated points seen by the detector is substantially constant whatever the inclination of the rays in the beam with respect to the axis of the spherical reflector.

The reflectors embodying the invention make it possible to determine straight or curved loci on the basis of which the distance and the direction of an object with respect to a reference frame can be calculated.

Furthermore, an aperiodic distribution of undulations enables coding to be carried out on the distribution of discrete points along the aforesaid loci for the purpose of discrimination between several reflectors.

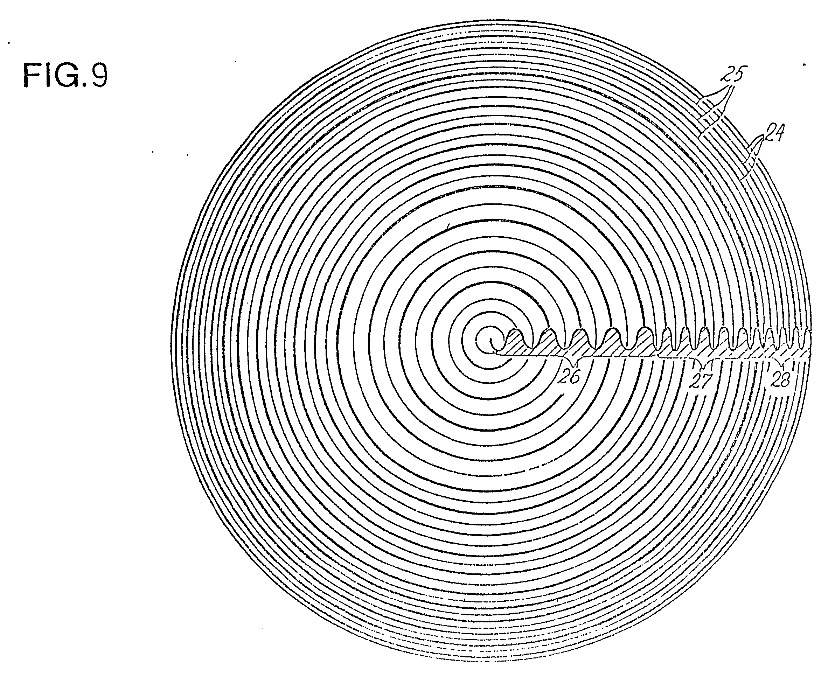

Fig. 9 shows a non-periodic reflector derived from the reflector in Fig. 3 in which the undulations are not periodic. The bold lines 24 are the tops of the undulations with sinusoidal thickness and the fine lines 25 are the troughs of these undulations. It can be seen in Fig. 9 that there are three groups 26, 27, 28 with five undulations each. The undulations are spatially periodic in each group but are not so from one group to another.

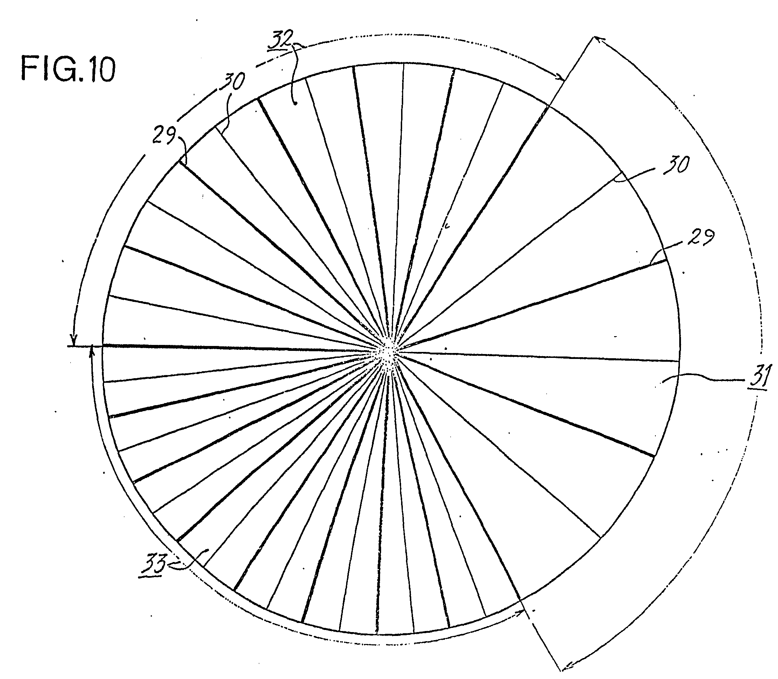

Fig. 10 shows a non-periodic reflector derived from the reflector in Fig. 4 in which the undulations are not periodic. The bold lines 29 are the tops of the undulations with sinusoidal thickness and the fine lines 30 are the troughs of these undulations. It can be seen in Fig. 10 that there are three groups 31, 32, 33 with 3, 6 and 8 undulations respectively. The undulations are spatially periodic in each group but are not so from one group to another.

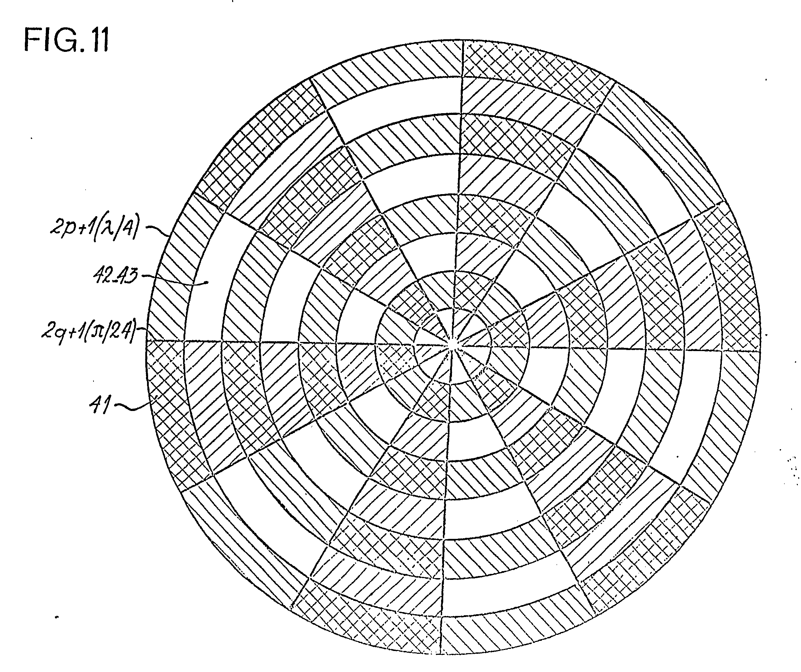

Fig. 11 represents a reflector having both, or at least partially, the orthoradial undulations of the reflector in Fig. 3 and the radial undulations of the reflector in Fig. 4. It results from this that the illuminated points seen by the detector lie both on a straight line and on a circle that cross at the center of the reflector and at the imager projection point J on the reflector plane. The point J is therefore determined by just one reflector.

To obtain the reflector in Fig. 11, the following surfaces are constructed:

$$z_1 = A \cos (2\pi p/\lambda) \qquad (18)$$

and

$$z_2 = A \cos k\theta \qquad (19)$$

If $z_1$ and $z_2$ are positive, the greater of the two is kept. If $z_1$ and $z_2$ are negative, the smaller of the two is

kept. If $z_1$ is positive and $z_2$ negative, $z_1$ is kept. If $z_1$ is negative and $z_2$ positive, $z_2$ is kept. The shaded areas in Fig. 11 depict the areas on the reflector where $z_1$ is positive and where $z_2$ is positive by respectively different shading. The parts that are double shaded are the parts where $z_1$ and $z_2$ are simultaneously positive (area 41). Those parts left blank (42) are the parts where $z_1$ and $z_2$ have opposite signs (the positive one is then kept) or that (43) where $z_1$ and $z_2$ are both negative (the smallest is kept). Areas 42 raise no problem and areas 43 are treated like areas 41.

In Fig. 11, the circles of radius $\lambda/4, 3\lambda/4, \ldots (2p-1) \lambda/4, \ldots (2p+1) \lambda/4$ for which $z_1$ is equal to zero are marked out, so as the directional straight lines

$$\theta=\frac{(2q-1)\pi}{2k}, \qquad \theta=\frac{(2q+1)\pi}{2k}, \qquad \theta=\frac{(2q+3)\pi}{2k}$$

with $k=12$, i.e.:

$$\theta=\frac{(2q\pi1)\pi}{24}, \qquad \theta=\frac{(2q+1)\pi}{24}, \qquad \theta=\frac{(2q+3)\pi}{24}$$

for which $z_2$ is equal to zero.

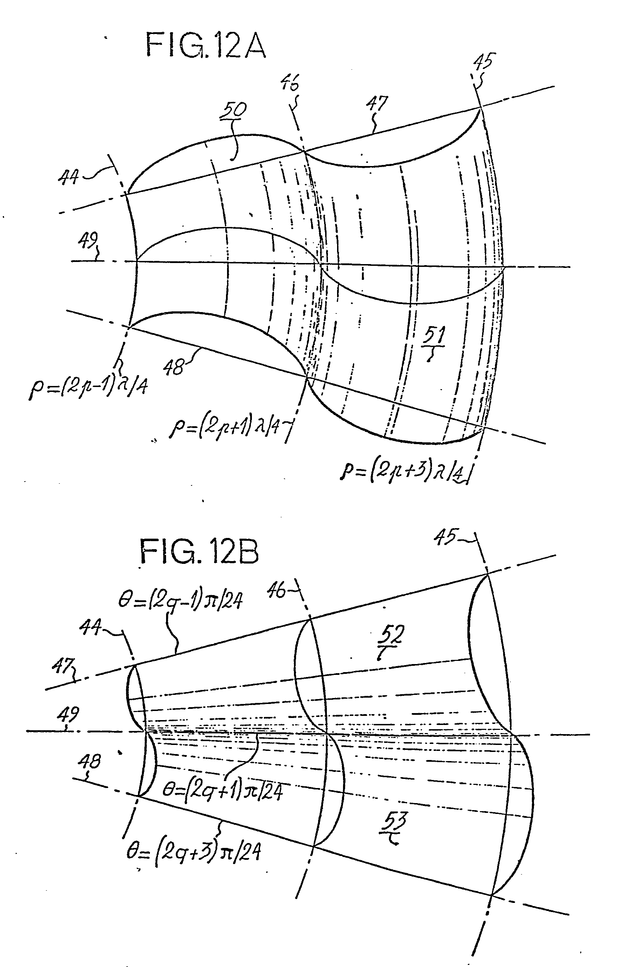

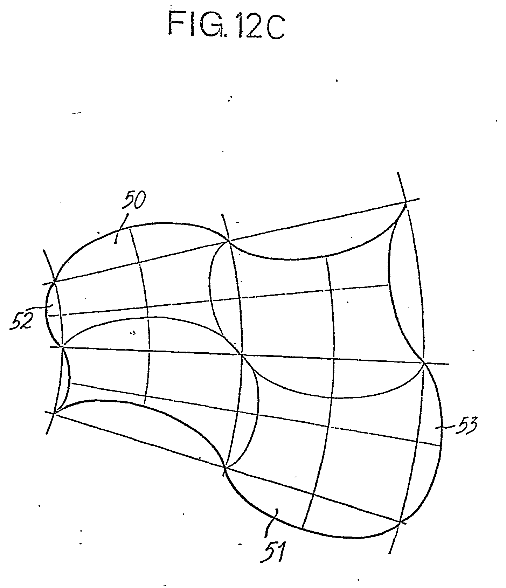

Fig. 12 represents a reflector portion formed of circles 44 and 45:

$$\rho=(2p-1)\pi/2 \quad \text{and} \quad \rho=(2p+3)\pi/2$$

and by the straight lines 47 and 48:

$$\theta=(2q-1)\pi/24 \quad \text{and} \quad \theta=(2q+3)\pi/24$$

Additionally, circle 46 has been plotted:

$$\rho=(2p+1)\pi/2$$

as has been too straight line 49:

$$\theta=(2q+1)\pi/24$$

Circles 44, 45 and 46 correspond to x=0 and lie in the plane x0y. Fig. 12a comprises two circular channels 50 and 51 the first of which stands proud and the second is hollow.

Circles 44, 45 and 46 and straight lines 47, 48 and 49 are shown also in Fig. 12b. Straight lines 47, 48 and 49 correspond to z=0 and lie in the plane x0y. Fig. 12b includes two rectilinear channels 52 and 53 the first of which stands proud and the second is hollow.

To build up Fig. 12c, the greater of $z_1$ and $z_2$ must be kept. $z_1$ and $z_2$ are equal when

$$\rho=k\lambda(\theta/2\pi) \tag{20}$$

Equation (20) describes Archimeded spiral. If $\theta$ is replaced by $(2q+1) (\pi/2k)$, this gives

$$\rho=(2q+1) (\lambda/4)$$

It can be seen that the spiral runs through the points where the circles: $\rho=(2p+1) \lambda/4$ and straight lines: $\theta=(2q+1) \pi/2k$ intersect.

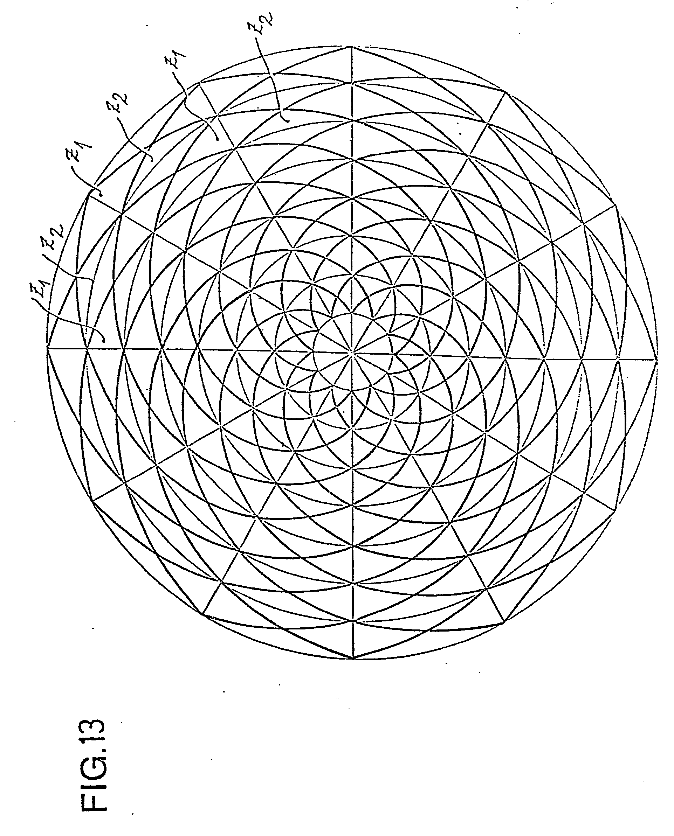

In Fig. 13, p has been varied from 0 to 7 and q from 0 to 11. An indication is given in each separate area as to whether it is the spiral $z_1$ or the spiral $z_2$ which is kept, depending on which of the two is the greater in the area in question.

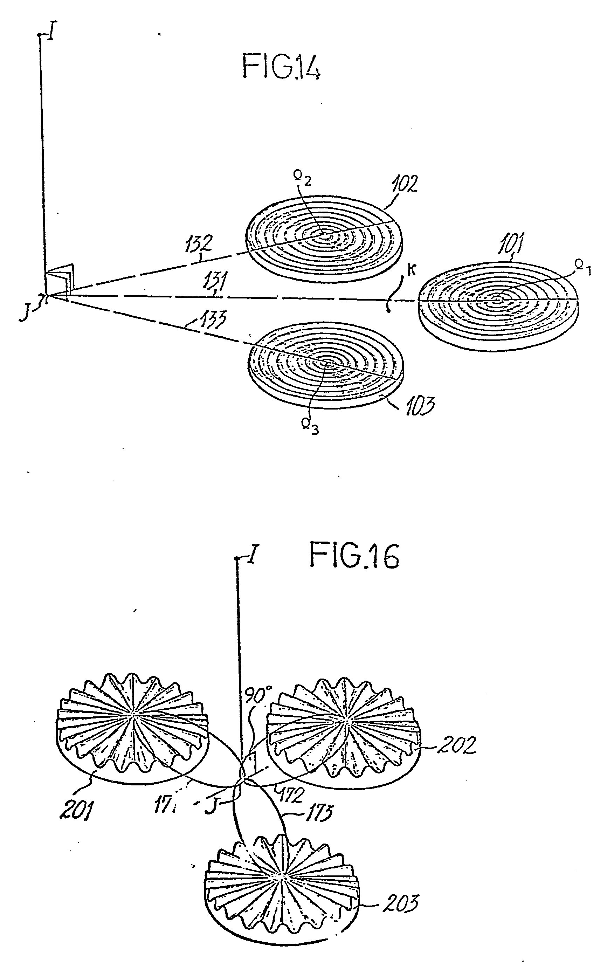

Fig. 14 depicts a first embodiment of the system according to the invention.

Three reflectors 101, 102, 103 of the type shown in Fig. 3 are arranged in the same plane and are located at the corners of an equilateral triangle. When the reflectors are illuminated, they send rectilinear illuminated dot lines 131, 132, 133 to the detector. These dot lines cross at the point J and the straight line IJ (I imager) runs perpendicular to the reflector plane. When the reflectors are arranged at the corners of an isoceles triangle, or any other triangle, an additional indication is given as to their orientation.

It should be noticed that the point J of the perpendicular from I is a undeterminate point in the reflector of Fig. 3. Accordingly, at least two reflectors of the type shown in Fig. 3 are necessary for a position determination.

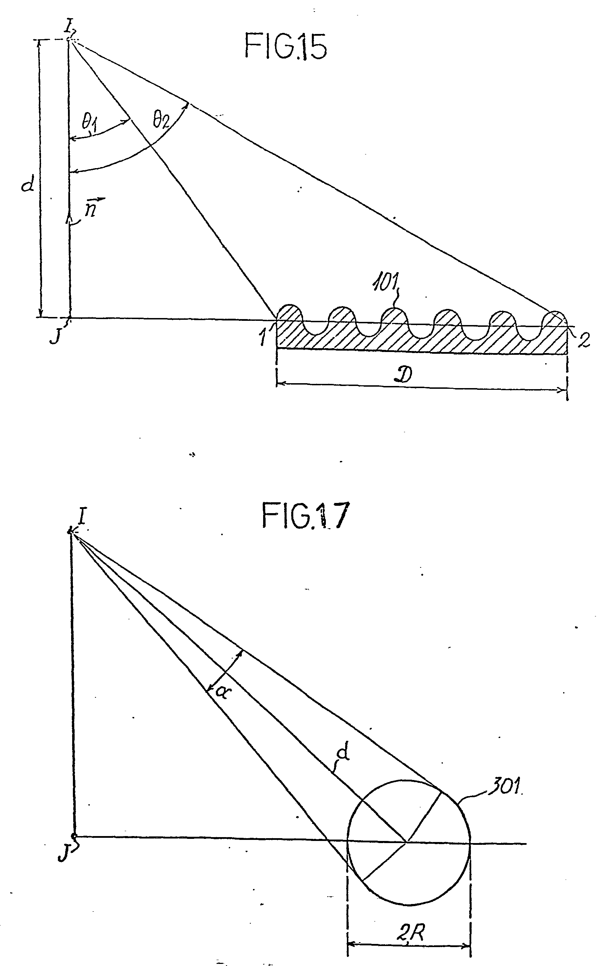

Fig. 15 represents a diametral cross-section of reflector 101 in Fig. 14 along a plane running through the normal $\vec{n}$ to the point J. Ends 1 and 2 of the diameter $D$ of said reflector aligned along straight line 131 are seen by the detector through two angles $\theta_1$ and $\theta_2$ with the normal $\vec{n}$, and the distance d=IJ is given by the following formula:

$$d = \frac{D}{\tan \theta_2 - \tan \theta_1} \qquad (21)$$

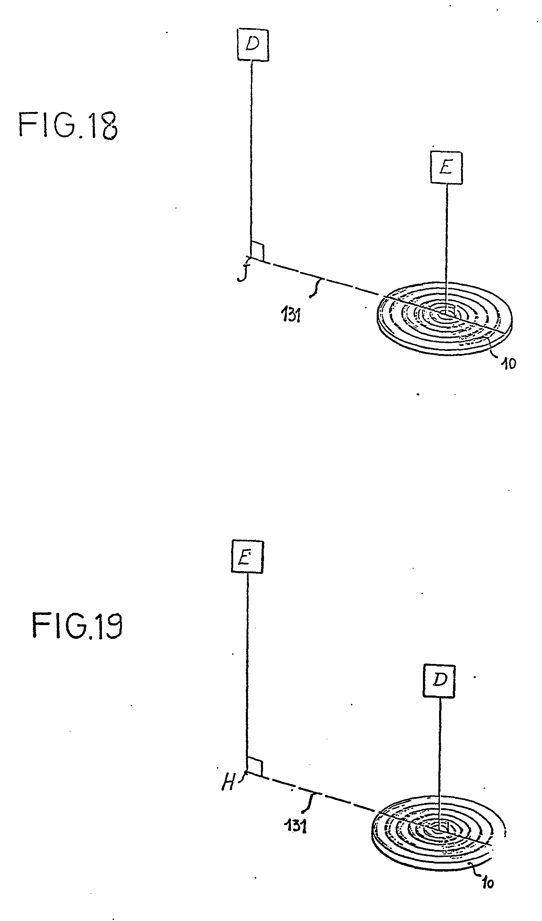

Fig. 16 depicts a second embodiment of the position determining system.

Three reflectors 201, 202, 203 of the type shown in Fig. 4 are arranged in the same plane and are located at the corners of an equilateral triangle. When the reflectors are illuminated, they send circular illuminated dot lines 171, 172, 173 to the detector. These dot lines cross at the point J and the straight line IJ (I, imager) runs perpendicular to the reflector plane. When the three reflectors are arranged at the corners of an isoceles triangle, or any other triangle, an additional indication is given as to their orientation.

The leading advantage of the spherical reflector of Fig. 8 lies in that the apparent dimension of the segment formed by the illuminated dots that the detector seen is substantially constant whatever the detector (point I) position with respect to the center of the reflector for a given distance therebetween.

Fig. 17 ressembles Fig. 15 except that flat reflector 101 with concentric circular corrugations is replaced by a spherical reflector 301. $\alpha$ is the angle through which the detector sees the spherical reflector and R is the radius of this reflector, whereupon the distance d is given by:

$$d = \frac{R\sqrt{2}}{\sqrt{1 - \cos \alpha}} \qquad (22)$$

It will be observed that should only the object position be sought after, then just one spherical reflector will suffice.

The three-reflector arrangement as described in relation to concentric circular corrugation reflectors and rectilinear radial corrugation reflectors can also be devised with other types of reflector described in the foregoing.

Such arrangements are readily conceived and there is no point in representing them specifically. It should be noted that when the dot lines are straight lines, two reflectors are sufficient for determining the point J. If the dot line curves are circular, three reflectors are required in order to clear any doubt because two circles cross in two places. Lastly, for those reflectors presenting one straight line and one circle as far as dot lines are concerned, one reflector will suffice.

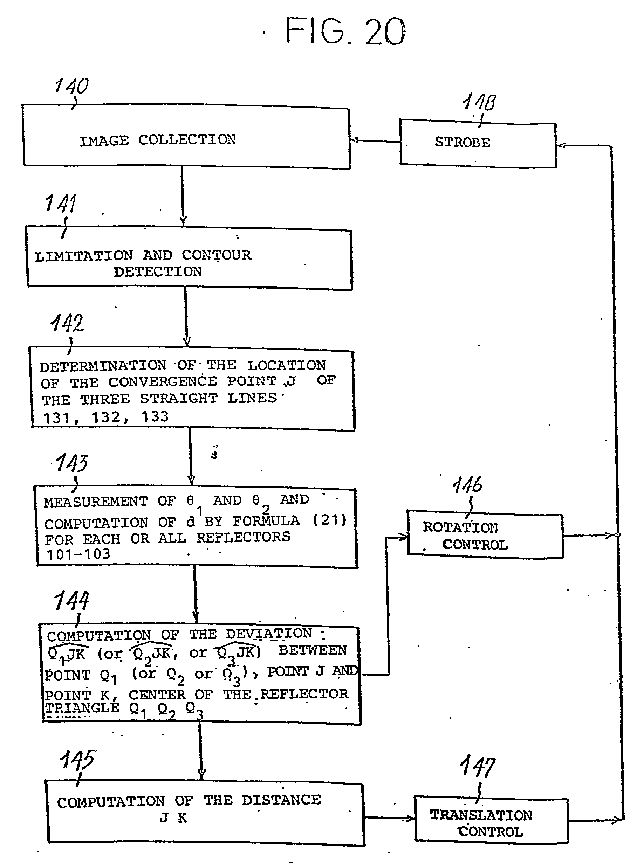

Up to this point, it has been assumed that the radiating source and the detector coincided. Figs. 18 and 19 cover the case where these two items are separate. In Fig. 18, the source E is vertically above the centre of reflector 10. The marking illuminated dot lines such as 131 converge on the point J, the detector's projection on the reflector plane. In Fig. 19, the detector D is vertically above the centre of reflector 10. The marking illuminated dot lines such as 131 converge on the point H, the source's projection in the reflector plane.

The case put forward in Fig. 18 is particularly interesting since it enables the reflector and the source to be mounted on a body movable in the field of view and the detector in a fixed station.

An application of the system embodying the invention for the automatic guidance of self-propelled vehicles such as trucks will now be described in relation to Figs. 19 and 20. The necessary computation circuitry is housed in the block close to the detector.

The detector consists of a charge coupled device (CCD) camera. Fig. 20 gives the system algorithm;

—140 ... image collection;

—141 ... limitation and contour detection;

—142 ... determination of the location of the convergence point J of the three straight lines, 131, 132, 133;

—143 ... measurement of $\theta_1$ and $\theta_2$ and computation of d by formula (21); $\theta_1$ and $\theta_2$ may be measured for one or all reflectors;

—144 ... computation of the deviation

$$\widehat{Q_1 \, JK} \text{ (or } \widehat{Q_2 \, JK} \text{ or } \widehat{Q_3 \, JK})$$

between point K the center of the triangle $Q_1$, $Q_2$, $Q_3$ formed by the centers of reflectors 101—103;

—145 ... computation of the distance JK.

Knowing the distance JK and the angle

$$\widehat{Q_1 \, JK} \text{ (or } \widehat{Q_2 \, JK} \text{ or } \widehat{Q_3 \, JK})$$

the imager can be moved relatively to the reflector assembly or the reflector assembly relatively to the imager in order for the imager to project at point K on the reflector plane. The rotation of the imager (or the rotation of the reflector assembly) is implemented by circuit 146 controlled by circuit 144 and the translation of the imager (or the translation of the reflector assembly) is implemented by circuit 147 controlled by circuit 145.

**Claims**

1. Object discrimination and position determination system in which the projection (J) of a given point (W, ED) onto a given plane is determined, the projecting line (JW, JED) being normal to said given plane, characterized in that said system comprises:
a radiation transmitter (E),
a reflective means (10), and
a detector (D),
said reflective means (10) reflecting said radiation from said transmitter to said detector (D), and said reflective means comprising a first plane surface defining said given plane and a second surface having an axis of symmetry (P₀) and carrying a plurality of substantially adjacent undulations exhibiting a geometric pattern symmetrical with respect to said axis of symmetry, such that said reflective means when illuminated by said transmitter produces at least one illuminated pattern which as seen from the detector has a first geometric shape when the projection point (J) is on the symmetry axis and a second geometric shape when the projection point (J) is outside the axis of symmetry, the first geometric shape of the illuminated pattern being a continuous line identical with the undulation pattern and the second geometric shape being an illuminated dot line running through the projection point (J),
whereby either the transmitter or the detector or both or the midpoint between the transmitter and the detector is situated at said given point, and
whereby said system also comprises means for determining the intersection point of at least two of said illuminated dot lines, this point being the projection point (J).

2. A system according to claim 1, wherein said given point is located on a mid-point (W) of the segment joining the transmitter (E) to the detector (D).

3. System according to claim 1 or 2, wherein the reflective means comprises at least two reflectors (101, 102, 103), the illuminated dot lines corresponding to said reflectors appearing as running through both symmetry centers of the reflector and said intersection point.

4. System according to claim 3, wherein a reflector comprises undulations (12) which are substantially in the shape of concentric circles about the symmetry center of the reflector, and the corresponding illuminated dot line appearing as a straight line (13) running through the symmetry center (P₀) of the reflector.

5. System according to claim 3, wherein a reflector comprises undulations (14) which are substantially in the shape of radii running through the symmetry center, and the corresponding illuminated dot line appearing as a circle (17) running through the symmetry center (P₀) of the reflector.

6. System according to claim 3, wherein a reflector comprises first and second undulations (12, 14) which are respectively substantially in the shape of circles concentric about the symmetry center of the reflector and in the shape of radii running through the symmetry center of the reflector, and the corresponding illuminated dot line appearing as the combination of a straight line (13) and a circle (17), said straight line and circle intersecting orthogonally.

7. System according to claim 3, wherein a reflector comprises undulations (18) which are substantially in the shape of equilateral hyperbolae having their center at the symmetry center of the reflector, and the corresponding illuminated dot line appearing as another equilateral hyperbola (19) running through the symmetry center of the reflector.

8. System according to claim 3, wherein a reflector has a substantially spherical surface and comprises undulations (21) which are substantially in the shape of latitude grooves on said spherical surface, and the corresponding illuminated dot line appearing as a straight line (22) running through the symmetry center of a spherical surface projection seen by the detector (D).

9. System according to claim 4, wherein the concentric circle undulations (12) are arranged in undulation groups (26, 27, 28), the gap between adjacent undulations being periodic in each group and non-periodic from one group to another.

10. System according to claim 5, wherein the radii undulations (14) are arranged in undulation groups (31, 32, 33), the gap between adjacent undulations being periodic in each group and non-periodic from one group to another.

**Patentansprüche**

1. System zur Objektunterscheidung und Positionsbestimmung, bei dem die Projektion (J) eines gegebenen Punktes (W, ED) auf eine gegebene Ebene bestimmt wird, wobei die Projektionslinie (JW, JED) senkrecht zur gegebenen Ebene ist, dadurch gekennzeichnet, daß das System umfaßt:
—einen Strahlungssender (E),
—eine Reflexionseinrichtung (10) und
—einen Detektor (D),
—wobei die Reflexionseinrichtung (10) die Strahlung vom Sender zum Detektor (D) reflektiert und die Reflexionseinrichtung eine die gegebene Ebene festlegende erste Ebenenfläche und eine zweite Fläche aufweist, die eine Symmetrieachse ($P_0$) aufweist und eine Anzahl von ein in bezug auf die Symmetrieachse symmetrisches geometrisches Muster zeigenden benachbarten Wellenformen trägt, derart, daß die Reflexionseinrichtung, wenn sie von dem Sender angestrahlt ist, wenigstens ein Leuchtmuster erzeugt, das vom Detektor her gesehen eine erste geometrische Form, wenn der Projektionspunkt (J) auf der Symmetrieachse liegt, und eine zweite geometrische Form aufweist, wenn der Projektionspunkt (J) außerhalb der Symmetrieachse liegt, wobei die erste geometrische Form des Leuchtmusters eine kontinuierliche Linie identisch mit dem Wellenformmuster ist und die zweite geometrische Form eine durch den Projektionspunkt (J) verlaufende Leuchtpunktlinie ist,

—wodurch entweder der Sender oder der Detektor oder beide oder der Mittelpunkt zwischen dem Sender und dem Detektor bei dem gegebenen Punkt liegt und

—wodurch das System auch eine Einrichtung zur Bestimmung des Schnittpunktes bei wenigstens zwei der Leuchtpunktlinien aufweist, wobei dieser Punkt der Projektionspunkt (J) ist.

2. System nach Anspruch 1, bei dem der gegebene Punkt auf einem Mittelpunkt (W) des den Sender (E) mit dem Detektor (D) verbindenden Segmentes liegt.

3. System nach Anspruch 1 oder 2, bei dem die Reflexionseinrichtung wenigstens zwei Reflektoren (101, 102, 103) aufweist, wobei die Leuchtpunktlinien den Reflektoren entsprechen, wobei sie erscheinen, als ob sie durch beide Symmetriezentren des Reflektors und des Schnittpunktes verlaufen.

4. System nach Anspruch 3, bei dem ein Reflektor Wellenformen (12) aufweist, die im wesentlichen in der Form von konzentrischen Kreisen um das Symmetriezentrum des Reflektors sind und die entsprechende Leuchtpunktlinie als gerade Linie (13) erscheint, die durch das Symmetriezentrum ($P_0$) des Reflektors verläuft.

5. System nach Anspruch 3, bei dem ein Reflektor Wellenformen (14) aufweist, die im wesentlichen in der Form von durch das Symmetriezentrum verlaufenden Radien sind, und wobei die entsprechende Leuchtpunktlinie als ein durch das Symmetriezentrum ($P_0$) des Reflektors verlaufender Kreis (17) erscheint.

6. System nach Anspruch 3, bei dem ein Reflektor erste und zweite Wellenformen (12, 14) aufweist, die jeweils im wesentlichen in der Form von um das Symmetriezentrum des Reflektors konzentrischen Kreisen und in der Form von durch das Symmetriezentrum des Reflektors verlaufenden Radien sind, und wobei die entsprechende Leuchtpunktlinie als die Kombination einer geraden Linie (13) und eines Kreises (17) erscheint, wobei sich die gerade Linie und der Kreis rechtwinklig schneiden.

7. System nach Anspruch 3, bei dem ein Reflektor Wellenformen (18) umfaßt, die im wesentlichen in der Form von gleichseitigen Hyperbeln sind, die ihr Zentrum beim Symmetriezentrum des Reflektors aufweisen und wobei die entsprechende Leuchtpunktlinie als eine weitere gleichseitige Hyperbel (19) erscheint, die durch das Symmetriezentrum des Reflektors verläuft.

8. System nach Anspruch 3, bei dem ein Reflektor eine im wesentlichen spärische Fläche aufweist und Wellenformen (21) umfaßt, die im wesentlichen in der Form von Breitennuten auf der sphärischen Fläche sind, und wobei die entsprechende Leuchtpunktlinie als eine gerade Linie (22) erscheint, die durch das Symmetriezentrum einer vom Detektor (D) gesehenen spärischen Flächenprojektion verläuft.

9. System nach Anspruch 4, bei dem die konzentrischen Kreiswellenformen (12) in Wellenformgruppen (26, 27, 28) angeordnet sind, wobei der Zwischenraum zwischen benachbarten Wellenformen in jeder Gruppe periodisch und von einer Gruppe zu einer anderen nichtperiodisch ist.

10. System nach Anspruch 5, bei dem die Radienwellenformen (14) in Wellenformgruppen (31, 32, 33) angeordnet sind, wobei der Zwischenraum zwischen benachbarten Wellenformen in jeder Gruppe periodisch und von einer Gruppe zu einer anderen nichtperiodisch ist.

**Revendications**

1. Système de discrimination et de détermination de position d'objets dans lequel la projection (J) d'un point donné (W, ED) sur un plan donné est déterminée, la ligne de projection (JW, JED) étant normale audit plan donné, caractérisé en ce que ledit système comprend:

un émetteur de rayonnement (E),

un moyen réflecteur (10), et

un détecteur (D),

ledit moyen réflecteur (10) réfléchissant ledit rayonnement à partir dudit émetteur vers ledit détecteur (D), et ledit moyen réflecteur comprenant une première surface plane définissant ledit plan donné et une seconde surface ayant un axe de symétrie ($P_0$) et supportant une pluralité d'ondulations sensiblement adjacentes présentant un modèle géométrique symétrique par rapport audit axe de symétrie, de sorte que ledit moyen réflecteur, lorsqu'il est éliminé par ledit émetteur, produise au moins un modèle illuminé qui, vu à partir du détecteur, a une première forme géométrique lorsque le point de projection (J) est sur l'axe de symétrie et une seconde forme géométrique lorsque le point de projection (J) est à l'extérieur de l'axe de symétrie, la première forme géométrique du modèle illuminé étant une ligne continue identique au modèle d'ondulation et la seconde forme géométrique étant une ligne de points illuminés passant par le point de projection (J),

de manière que l'émetteur ou le détecteur ou les deux ou le point milieu entre l'émetteur et le détecteur soit situé audit point donné, et

de manière que ledit système comprenne également des moyens pour déterminer le point d'intersection d'au moins deux desdites lignes de points illuminés, ce point étant le point de projection (J).

2. Un système selon la revendication 1, dans lequel ledit point donné est localisé sur un point milieu (W) du segment joignant l'émetteur (E) au détecteur (D).

3. Système selon la revendication 1 ou 2, dans lequel le moyen réflecteur comprend au moins deux mires (101, 102, 103), les lignes de points illuminés correspondant auxdites mires apparaissant comme passant à la fois par les centres de symétrie de la mire et dudit point d'intersection.

4. Système selon la revendication 3, dans lequel une mire comprend des ondulations (12) qui sont sensiblement sous la forme de cercles concentriques autour du centre de symétrie de la mire, et la ligne de points lumineux correspondante apparaissant comme une ligne droite (13) passant par le centre de symétrie $(P_0)$ de la mire.

5. Système selon la revendication 3, dans lequel une mire comprend des ondulations (14) qui sont sensiblement sous la forme de rayons passant par le centre de symétrie, et la ligne de points illuminés correspondante apparaissant comme un cercle (17) passant par le centre de symétrie $(P_0)$ de la mire.

6. Système selon la revendication 3, dans lequel une mire comprend des première et seconde ondulations (12, 14) qui sont respectivement sensiblement sous la forme de cercles concentriques autour du centre de symétrie de la mire et sous la forme de rayons passant par le centre de symétrie de la mire, et la ligne de points lumineux correspondant apparaissant comme la combinaison d'une ligne droite (13) et d'un cercle (17), lesdits ligne droite et cercle concourant orthogonalement.

7. Système selon la revendication 3, dans lequel une mire comprend des ondulations (18) qui sont sensiblement sous la forme d'hyperboles équilatères ayant leur centre au centre de symétrie de la mire, et la ligne de points lumineux correspondante apparaissant comme une autre hyperbole équilatère (19) passant par le centre de symétrie de la mire.

8. Système selon la revendication 3, dans lequel une mire a une surface sensiblement sphérique et comprend des ondulations (21) qui sont sensiblement sous la forme de rainures de latitude sur ladite surface sphérique, et la ligne de points lumineux correspondante apparaissant comme une ligne droite (22) passant par le centre de symétrie d'une projection de surface sphérique vue par le détecteur (D).

9. Système selon la revendication 4, dans lequel les ondulations de cercle concentrique (12) sont disposées en groupes d'ondulations (26, 27, 28), l'intervalle entre des ondulations adjacentes étant périodique dans chaque groupe et non-périodique d'un groupe à l'autre.

10. Système selon la revendication 5, dans lequel les ondulations de rayon (14) sont disposées en des groupes d'ondulations (31, 32, 33), l'intervalle entre des ondulations adjacentes étant périodique dans chaque groupe et non-périodique d'un groupe à l'autre.

# FIG.1

# FIG.2

# EP 0 147 333 B1

## FIG.3

FIG.4

FIG.5B

FIG.5A

FIG.6

18

19

$P_0$

$y$

$x$

FIG.7

$z$

$D(\psi)$

20

$\psi$

$z$

$o$

$y$

$\varphi$

$x$

4

FIG.8

EP 0 147 333 B1

FIG.9

FIG.10

EP 0 147 333 B1

FIG.11

2p+1(λ/4)

42,43

2q+1(π/24)

41

EP 0 147 333 B1

## FIG.12A

$P=(2p-1)\lambda/4$

$P=(2p+1)\lambda/4$

$P=(2p+3)\lambda/4$

## FIG.12B

$\theta=(2q-1)\pi/24$

$\theta=(2q+1)\pi/24$

$\theta=(2q+3)\pi/24$

## FIG.12C

FIG.13

FIG.14

FIG.16

## FIG.15

## FIG.17

FIG.18

FIG.19

# FIG. 20

*140*
```
IMAGE COLLECTION
```

*118*
```
STROBE
```

*141*
```
LIMITATION AND CONTOUR
DETECTION
```

*142*
```
DETERMINATION OF THE LOCATION
OF THE CONVERGENCE POINT J   OF
THE THREE STRAIGHT LINES
131, 132, 133
```

*143*
```
MEASUREMENT OF θ₁ AND θ₂ AND
COMPUTATION OF d BY FORMULA (21)
FOR EACH OR ALL REFLECTORS
101-103
```

*146*
```
ROTATION
CONTROL
```

*144*
```
COMPUTATION OF THE DEVIATION
Q₁JK (or Q₂JK, or Q₃JK) BETWEEN
POINT Q₁ (or Q₂ or Q₃), POINT J AND
POINT K, CENTER OF THE REFLECTOR
TRIANGLE Q₁ Q₂ Q₃
```

*145*
```
COMPUTATION OF THE DISTANCE
J K
```

*147*
```
TRANSLATION
CONTROL
```

15